# EUROPEAN PATENT APPLICATION

(11) **EP 3 410 792 A1**
(43) Date of publication of application: **05.12.2018**
(21) Application number: 17743681.3
(22) Date of filing: 20.01.2017
(51) Int. Cl.: H04W 56/00

(54) **SYNCHRONIZATION METHOD AND APPARATUS**

(30) Priority: 29.01.2016 CN 201610066528
(71) Applicant: China Academy of Telecommunications Technology, Hai Dian District Beijing 100191 (CN)
(72) Inventor: ZHAO, Li, Beijing 100191 (CN); ZHOU, Haijun, Beijing 100191 (CN); PENG, Ying, Beijing 100191 (CN); LI, Yuanyuan, Beijing 100191 (CN); FANG, Jiayi, Beijing 100191 (CN)
(74) Representative: Körfer, Thomas
(86) International application number: PCT/CN2017/071941
(87) International publication number: WO 2017/129066

(57) **Abstract**

Disclosed are a synchronization method and apparatus, used for implementing a specific synchronization solution when a terminal node serves as a synchronization source. The synchronization method provided in the present application comprises: determining, when synchronization signals of a plurality of nodes are received, synchronization priorities of the plurality of nodes; and selecting, according to the synchronization priorities of the plurality of nodes, a synchronization signal of one of the nodes for synchronization.

## Description

This application claims the benefit of Chinese Patent Application No. 201610066528.8, filed with the Chinese Patent Office on January 29, 2016, and entitled "A synchronization method and apparatus". The entire content of the disclosure above is incorporated herein by reference.

### Field

The present disclosure relates to the field of communications, and particularly to a synchronization method and apparatus.

### Background

In a Long-Term Evolution (LTE) Device to Device (D2D) system, User Equipment (UE) is not a synchronization source, and an evolved Node B (eNB) is the synchronization source in the system. Nodes in the system have three synchronization priorities sorted as follows in a descending order of the priorities: in the coverage area of the eNB; partially in the coverage area of the eNB; and out of the coverage area of the eNB, which includes three situations: a Synchronization Reference (SyncRef) UE of the node out of the coverage area is a node partially in the coverage area; the SyncRef UE of the node out of the coverage area is a node out of the coverage area and not partially in the coverage area; and the node out of the coverage area has no SyncRef UE, and an independent synchronization source.

In an LTE Vehicle to Everything (V2X) system, a vehicle node is able to receive a Global Navigation Satellite System (GNSS) signal or a GNSS-equivalent signal directly, so the vehicle node obtaining the GNSS signal directly can operate as a Side Link Synchronization Signal (SLSS) synchronization source to transmit a synchronization signal and synchronization configuration information.

The LTE V2X system has two categories of synchronization sources, which are a vehicle node obtaining a GNSS signal or a GNSS-equivalent signal directly, and an eNB synchronized with a GNSS or GNSS-equivalent.

The eNB synchronized with the GNSS can provide synchronization using a downlink Primary Synchronization Signal (PSS)/Secondary Synchronization Signal (SSS), and the following problems occur if the eNB is a synchronization source: sometimes the eNB might fail to receive a GNSS signal or a GNSS-equivalent signal directly, and there may be a significant synchronization difference between the eNB and the GNSS, then, if the eNB continues to be the synchronization source, nodes in the coverage area of the network cannot be synchronized uniformly in a rapidly converging manner; even if the eNB can receive a GNSS signal or a GNSS-equivalent signal directly, due to path propagation, a significant synchronization difference might exist between a node on the edge of the coverage area of the network and a GNSS or GNSS-equivalent synchronized node; and there may be significant timing and frequency differences between eNBs.

In summary, there has been absent so far in the existing technologies a synchronization solution when terminals are used as synchronization sources.

### Summary

Embodiments of the disclosure provide a synchronization method and apparatus so as to provide a synchronization solution when a terminal node is used as a synchronization source.

An embodiment of the disclosure provides a synchronization method. The synchronization method includes: determining synchronization priorities of a plurality of nodes upon reception of synchronization signals of the plurality of nodes; and selecting a synchronization signal of one of the nodes for synchronization, according to the synchronization priorities of the plurality of nodes.

With this method, the synchronization priorities of the plurality of nodes are determined upon reception of the synchronization signals of the plurality of nodes, and the synchronization signal of one of the nodes is selected for synchronization, according to the synchronization priorities of the plurality of nodes, so that a synchronization solution is provided when terminal nodes are used as synchronization sources, and by setting different synchronization priorities for terminal nodes, precision of synchronization can be guaranteed, a signaling overhead can be lowered, and highly precise synchronization information can be transmitted.

In an embodiment, selecting the synchronization signal of one of the nodes for synchronization, according to the synchronization priorities of the plurality of nodes includes: selecting a synchronization signal of a node having a highest synchronization priority when the synchronization priorities of the plurality of nodes are different.

In an embodiment, power of the synchronization signal of the node having the highest synchronization priority is above a preset threshold.

In an embodiment, selecting the synchronization signal of one of the nodes for synchronization, according to the synchronization priorities of the plurality of nodes includes: selecting a synchronization signal of a node having a strongest signal power when the synchronization priorities of the plurality of nodes are different.

In an embodiment, a synchronization priority of each node is one of following priorities: a first priority, where a node having the first priority is a node obtaining a synchronization signal directly from a GNSS or a GNSS-equivalent; a second priority, where a node having the second priority is a node obtaining a synchronization signal from the node having the first priority; and a third priority, where a node having the third priority is a node obtaining a synchronization signal from the node at the second priority; or the node having the third priority is a node obtaining a synchronization signal from the node having the third priority; or the node having the third priority is a node operating independently as a synchronization source.

In an embodiment, the method further includes: using a synchronization signal of a GNSS for synchronization, upon reception of the synchronization signal of the GNSS; or, using a synchronization signal of a GNSS-equivalent for synchronization, upon reception of the synchronization signal of the GNSS-equivalent.

In an embodiment, the method further includes: using a local oscillator as an independent synchronization source when no synchronization signal is received.

An embodiment of the disclosure provides a synchronization apparatus. The apparatus includes: a first unit configured to determine synchronization priorities of a plurality of nodes upon reception of synchronization signals of the plurality of nodes; and a second unit configured to select a synchronization signal of one of the nodes for synchronization, according to the synchronization priorities of the plurality of nodes.

In an embodiment, the second unit is further configured to: select a synchronization signal of a node having a highest synchronization priority when the synchronization priorities of the plurality of nodes are different.

In an embodiment, power of the synchronization signal of the node having the highest synchronization priority is above a preset threshold.

In an embodiment, the second unit is further configured to: select a synchronization signal of a node having a strongest signal power when the synchronization priorities of the plurality of nodes are different.

In an embodiment, a synchronization priority of each node is one of following priorities: a first priority, where a node having the first priority is a node obtaining a synchronization signal directly from a GNSS or a GNSS-equivalent; a second priority, where a node having the second priority is a node obtaining a synchronization signal from the node having the first priority; and a third priority, where a node having the third priority is a node obtaining a synchronization signal from the node at the second priority; or the node having the third priority is a node obtaining a synchronization signal from the node having the third priority; or the node having the third priority is a node operating independently as a synchronization source.

In an embodiment, the second unit is further configured to: use a synchronization signal of a GNSS for synchronization, upon reception of the synchronization signal of the GNSS; or use a synchronization signal of a GNSS-equivalent for synchronization, upon reception of the synchronization signal of the GNSS-equivalent.

In an embodiment, the second unit is further configured to: use a local oscillator as an independent synchronization source when no synchronization signal is received.

An embodiment of the disclosure provides another synchronization apparatus. The apparatus includes a processor configured to read and execute a program in a memory to: determine synchronization priorities of a plurality of nodes upon reception of synchronization signals of the plurality of nodes through a transceiver; and select a synchronization signal of one of the nodes for synchronization, according to the synchronization priorities of the plurality of nodes.

In an embodiment, the processor is further configured to: select a synchronization signal of a node having a highest synchronization priority when the synchronization priorities of the plurality of nodes are different.

In an embodiment, power of the synchronization signal of the node having the highest synchronization priority is above a preset threshold.

In an embodiment, the processor is further configured to: select a synchronization signal of a node having a strongest signal power when the synchronization priorities of the plurality of nodes are different.

In an embodiment, a synchronization priority of each node is one of following priorities: a first priority, where a node having the first priority is a node obtaining a synchronization signal directly from a GNSS or a GNSS-equivalent; a second priority, where a node having the second priority is a node obtaining a synchronization signal from the node having the first priority; and a third priority, where a node having the third priority is a node obtaining a synchronization signal from the node at the second priority; or the node having the third priority is a node obtaining a synchronization signal from the node having the third priority; or the node having the third priority is a node operating independently as a synchronization source.

In an embodiment, the processor is further configured to: use a synchronization signal of a GNSS for synchronization, upon reception of the synchronization signal of the GNSS; or use a synchronization signal of a GNSS-equivalent for synchronization, upon reception of the synchronization signal of the GNSS-equivalent.

In an embodiment, the processor is further configured to: use a local oscillator as an independent synchronization source when no synchronization signal is received.

### Brief Description of the Drawings

Fig. 1 is a schematic flow chart of a synchronization method according to an embodiment of the disclosure.
Fig. 2 is a schematic diagram of a GNSS based synchronization scenario where GNSS nodes exist in and out of a coverage area of a network, according to an embodiment of the disclosure.
Fig. 3 is a schematic diagram of a GNSS based synchronization scenario including a tunnel, according to an embodiment of the disclosure.
Fig. 4 is a schematic structural diagram of a synchronization apparatus according to an embodiment of the disclosure.
Fig. 5 is a schematic structural diagram of another synchronization apparatus according to an embodiment of the disclosure.

### Detailed Description of the Embodiments

Embodiments of the disclosure provide a synchronization method and apparatus so as to provide a synchronization solution when terminal nodes are used as synchronization sources.

In LTE D2D, a User Equipment (UE) is not used as a synchronization source. Whereas in an LTE V2X system, since a vehicle node is able to receive a GNSS signal or a GNSS-equivalent signal directly, the vehicle node obtaining the GNSS signal directly can operate as a synchronization source to transmit an SLSS and synchronization configuration information. In the LTE V2X system, an eNB controls nodes to perform synchronization based upon a GNSS or a GNSS-equivalent, or based upon the eNB. The embodiments of the disclosure only describes that the eNB controls the nodes to perform synchronization based upon the GNSS or the GNSS-equivalent.

When the eNB instructs the nodes to perform GNSS-based or GNSS-equivalent-based synchronization, since sometimes the eNB might fail to receive synchronization signals from the GNSS reliably, and a transmission delay exists, synchronization differences might exist between the nodes synchronized with the eNB, and between the eNB and another eNB. Therefore, the eNB is not used as a synchronization source any longer, and only nodes obtaining a GNSS signal directly are used as synchronization sources.

A node in the network falls into one of the following situations according to different precision of synchronization.

In a first situation, the node obtains a signal of the GNSS or the GNSS-equivalent directly, and is synchronized at the highest precision.

In a second situation, the node cannot obtain any signal of the GNSS or GNSS-equivalent directly, and selects a node obtaining a signal of the GNSS or GNSS-equivalent directly as a synchronization reference UE, that is, the GNSS or GNSS-equivalent signal arrives at the receiving node via one hop. The precision of synchronization involves two components as compared with the GNSS or GNSS-equivalent signal: a one-hop transmission error, and a reception processing error.

In a third situation, the node cannot obtain any signal of the GNSS or GNSS-equivalent directly, and does not select any node obtaining a signal of the GNSS or GNSS-equivalent directly as a synchronization reference UE, but selects a node, which cannot obtain any signal of the GNSS or GNSS-equivalent directly, as the synchronization reference UE, that is, the GNSS or GNSS-equivalent signal arrives at the receiving node via two or more hops. The precision of synchronization involves two components as compared with the GNSS or GNSS-equivalent signal: a multi-hop transmission error, and a reception processing error.

In a fourth situation, the node cannot obtain any signal of the GNSS or GNSS-equivalent directly, does not receive any valid synchronization signal, and does not select any node as a synchronization reference UE, but the node operates as an independent synchronization source. The precision of synchronization is dependent upon the precision of a local oscillator.

In order to eliminate temporal discontinuity arising from a synchronization error, synchronization priorities shall be defined for the synchronization error situations above, but considering a signaling overhead caused by too many synchronization priorities, and considering an accumulative error when the synchronization information is transmitted via multiple hops, there has to be a tradeoff between conditions such as eliminating the synchronization error, ensuring the precision of synchronization, lowering the signaling overhead, and reasonable multi-hop transmission,. Since there is lower precision of synchronization corresponding to the third and four situations above, both of them are considered at the same priority.

The synchronization priorities in the GNSS or GNSS-equivalent based synchronization mode are sorted as follows in a descending order of the priorities.

A first priority (Priority 1) relates to a GNSS or GNSS-equivalent signal transmitted via no hop. A node at this priority is synchronized directly with the GNSS or GNSS-equivalent, where the GNSS-equivalent is a navigation system that can provide absolute precision and is similar to the GNSS.

A second priority (Priority 2) relates to a GNSS or GNSS-equivalent signal transmitted over one hop. A node at this priority cannot be synchronized directly with the GNSS or GNSS-equivalent, but is synchronized with a node synchronized directly with the GNSS or GNSS-equivalent.

A third priority (Priority 3) relates to the other situations. A node at this priority cannot obtain any GNSS or GNSS-equivalent signal directly, and is a UE which can receive a valid synchronization signal transmitted by a UE at the Priority 2. Or, a node at this priority can neither obtain any GNSS or GNSS-equivalent signal directly, nor receive any valid synchronization signal transmitted by a UE at a priority above the Priority 3, but is a UE which can receive a valid synchronization signal transmitted by a UE at the Priority 3. Or, a node at this priority can neither obtain any GNSS or GNSS-equivalent signal directly, nor receive a synchronization signal transmitted from any UE, but operates as an independent synchronization source.

When a node receives a plurality of synchronization signals, a synchronization reference UE can be selected with reference to a method for selecting a synchronization reference UE in a D2D scenario in the Release 12 (R12), and a synchronization priority thereof can be allocated as described above.

A strongest signal is selected among synchronization signals at the same priority, and an S criterion of Reference Signal Received Power (RSRP) and a hysteresis for a power level shall be satisfied, where the S criterion refers to that the signal's power satisfies a received signal power threshold.

A synchronization signal of a node at the highest synchronization priority is selected among synchronization signals at different priorities, and further the S criterion shall be satisfied.

With the design above, the synchronization priorities can be set reasonably, the precision of synchronization can be guaranteed, the signaling overhead can be lowered, and the highly precise synchronization information can be transmitted reasonably over two hops in the GNSS based synchronization mechanism in the LTE V2X system.

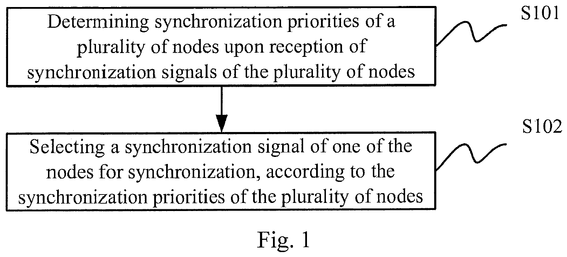

Referring to Fig. 1, a synchronization method according to an embodiment of the disclosure includes the following operations.

S101: determining synchronization priorities of a plurality of nodes upon reception of synchronization signals of the plurality of nodes.

Herein the nodes can be UEs, e.g., vehicles nodes in an LTE V2X system, etc.

S102: selecting a synchronization signal of one of the nodes for synchronization, according to the synchronization priorities of the plurality of nodes.

With this method, the synchronization priorities of the plurality of nodes are determined upon reception of the synchronization signals of the plurality of nodes, and the synchronization signal of one of the nodes is selected for synchronization, according to the synchronization priorities of the plurality of nodes, so that a synchronization solution is provided when terminal nodes are used as synchronization sources, and by setting different synchronization priorities for terminal nodes, precision of synchronization can be guaranteed, a signaling overhead can be lowered, and highly precise synchronization information can be transmitted.

In an embodiment, selecting the synchronization signal of one of the nodes for synchronization, according to the synchronization priorities of the plurality of nodes includes: selecting a synchronization signal of a node having a highest synchronization priority when the synchronization priorities of the plurality of nodes are different.

In an embodiment, power of the synchronization signal of the node having the highest synchronization priority is above a preset threshold.

Herein the value of the threshold can be set according to actual needs, although the embodiment of the disclosure is be limited thereto.

In an embodiment, selecting the synchronization signal of one of the nodes for synchronization, according to the synchronization priorities of the plurality of nodes includes: selecting a synchronization signal of a node having a strongest signal power when the synchronization priorities of the plurality of nodes are different.

In an embodiment, a synchronization priority of each node is one of following priorities: a first priority, where a node having the first priority is a node obtaining a synchronization signal directly from a GNSS or a GNSS-equivalent; a second priority, where a node having the second priority is a node obtaining a synchronization signal from the node having the first priority; and a third priority, where a node having the third priority is a node obtaining a synchronization signal from the node at the second priority; or the node having the third priority is a node obtaining a synchronization signal from the node having the third priority; or the node having the third priority is a node operating independently as a synchronization source.

In an embodiment, the method further includes: using a synchronization signal of a GNSS for synchronization, upon reception of the synchronization signal of the GNSS; or, using a synchronization signal of a GNSS-equivalent for synchronization, upon reception of the synchronization signal of the GNSS-equivalent.

In an embodiment, the method further includes: using a local oscillator as an independent synchronization source when no synchronization signal is received.

Two embodiments are described below.

A first embodiment relates to a scenario where there are GNSS nodes in and out of a coverage area of a network.

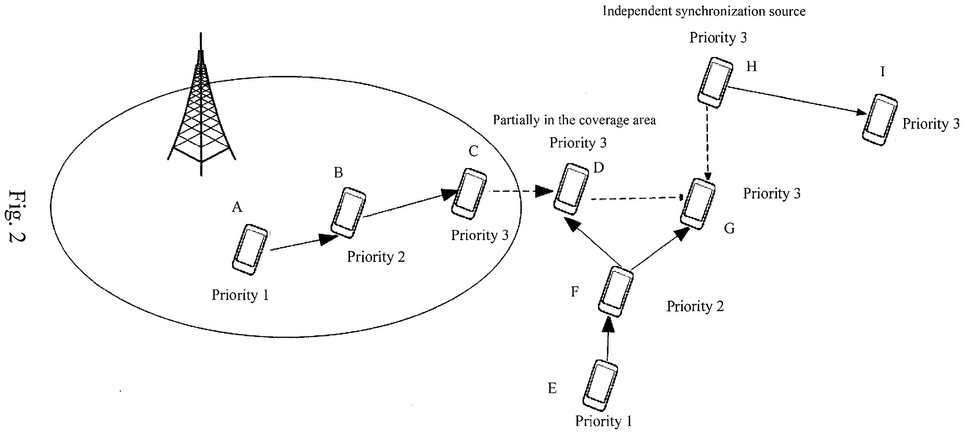

Referring to Fig. 2, synchronization priorities are allocated in the order as described above in the scenario where there are GNSS nodes in and out of the coverage area of the network.

The priority of a node A at the Priority 1 in the coverage area is higher than that of a node B at the Priority 1 in the coverage area, and the priority of the node B at the Priority 2 in the coverage area is higher than that of a node C at the Priority 3 in the coverage area, so synchronization information is forwarded from the node A at the Priority 1 in the coverage area to the node C at the Priority 3 in the coverage area through the node B at the Priority 2 in the coverage area.

The priority of a node E at the Priority 1 out of the coverage area is higher than that of a node F at the Priority 2 out of the coverage area, and the priority of the node F at the Priority 2 out of the coverage area is higher than the priorities of a node D and of a node G at the Priority 3 out of the coverage area, so synchronization information is forwarded from the node E at the Priority 1 out of the coverage area to the nodes D and G at the Priority 3 out of the coverage area through the node F at the Priority 2 out of the coverage area.

When a node cannot receive any synchronization information, it operates as an independent synchronization source at a synchronization priority of Priority 3.

When the node D partially in the coverage area receives synchronization information of the node C at the Priority 3 in the coverage area, and of the node F at the Priority 2 out of the coverage area, since the priority of the node F at the Priority 2 out of the coverage area is higher than that of the node C at the Priority 3 in the coverage area, the node D partially in the coverage area is synchronized with the node F at the Priority 2 out of the coverage area, and the synchronization priority of the node D is the Priority 3.

Similarly, when the node G at the Priority 3 out of the coverage area receives synchronization information of the node D at the Priority 3 partially in the coverage area, a node H at the Priority 3, which is an independent synchronization source, and the node F at the Priority 2 out of the coverage area, the node G is synchronized with the node F at the Priority 2 out of the coverage area, and the synchronization priority of the node G is the Priority 3.

The synchronization priority of a node I out of the coverage area, which is synchronized with the independent synchronization source node H, is the Priority 3.

A second embodiment relates to a GNSS based synchronization scenario with a tunnel.

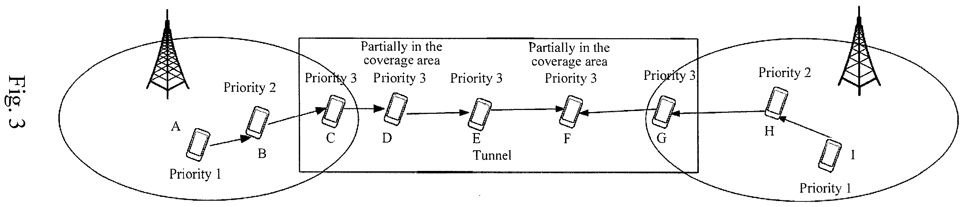

In the scenario with the tunnel, synchronization priorities are allocated in the order as described above, as illustrated in Fig. 3.

The priority of a node A at the Priority 1 in the coverage area is higher than that of a node B at the Priority 1 in the coverage area, and the priority of the node B at the Priority 2 in the coverage area is higher than that of a node C at the Priority 3 in the coverage area, so synchronization information is forwarded from the node A at the Priority 1 in the coverage area to the node C at the Priority 3 in the coverage area through the node B at the Priority 2 in the coverage area.

Suppose that a node moves rightward along the tunnel from the left side which is in the coverage area.

After the node enters the tunnel, when the node at a position D partially in the coverage area receives synchronization information of the node C at the Priority 3 in the coverage area, the synchronization priorities of the node at the position D partially in the coverage area is the Priority 3, same as that of the node C at the Priority 3 in the coverage area, which resides at the left entry of the tunnel.

Since the tunnel may be neither covered by any eNB nor covered by any GNSS, any node in the tunnel can only be self-synchronized using synchronization information from another node, so the synchronization priority any node in the tunnel is the Priority 3.

When the node at the position D continues to move rightward, it can receive synchronization information of a node E at the Priority 3 inside the tunnel, and receive synchronization information of the node G at the Priority 3 in the coverage area, the receiving node at the position D becomes a node at the position F partially in the coverage area, and is synchronized under a self-synchronization principle. The synchronization priority of the node at the position F is the Priority 3.

When the node at the position F continues to move rightward, it can receive synchronization information of a node at the position F at the Priority 3 in the tunnel, and can receive synchronization information of a node H at the Priority 2 in the coverage area, the priority of the node H at the Priority 2 in the coverage area is higher than that of the node at the position F at the Priority 3 in the tunnel, and the synchronization priority of the receiving node is the Priority 3.

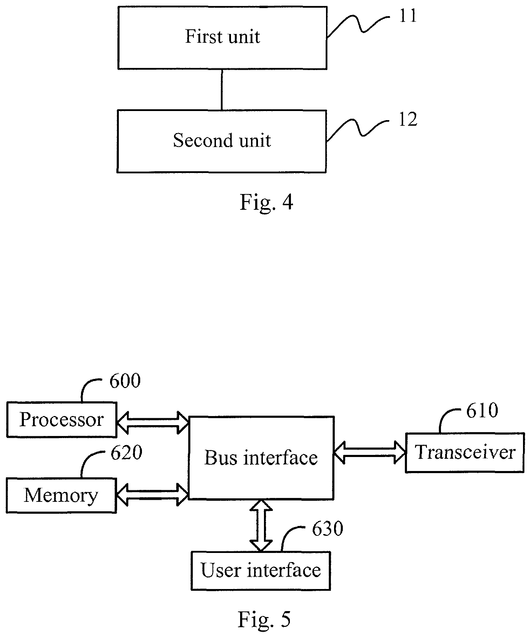

In correspondence to the method above, referring to Fig. 4, a synchronization apparatus according to an embodiment of the disclosure includes: a first unit 11 configured to determine synchronization priorities of a plurality of nodes upon reception of synchronization signals of the plurality of nodes; and a second unit 12 configured to select a synchronization signal of one of the nodes for synchronization, according to the synchronization priorities of the plurality of nodes.

In an embodiment, the second unit is configured: to: select a synchronization signal of a node having a highest synchronization priority when the synchronization priorities of the plurality of nodes are different.

In an embodiment, power of the synchronization signal of the node having the highest synchronization priority is above a preset threshold.

In an embodiment, the second unit is further configured to: select a synchronization signal of a node having a strongest signal power when the synchronization priorities of the plurality of nodes are different.

In an embodiment, a synchronization priority of each node is one of following priorities: a first priority, where a node having the first priority is a node obtaining a synchronization signal directly from a GNSS or a GNSS-equivalent; a second priority, where a node having the second priority is a node obtaining a synchronization signal from the node having the first priority; and a third priority, where a node having the third priority is a node obtaining a synchronization signal from the node at the second priority; or the node having the third priority is a node obtaining a synchronization signal from the node having the third priority; or the node having the third priority is a node operating independently as a synchronization source.

In an embodiment, the second unit is further configured to: use a synchronization signal of a GNSS for synchronization, upon reception of the synchronization signal of the GNSS; or use a synchronization signal of a GNSS-equivalent for synchronization, upon reception of the synchronization signal of the GNSS-equivalent.

In an embodiment, the second unit is further configured to: use a local oscillator as an independent synchronization source when no synchronization signal is received.

Referring to Fig. 5, another synchronization apparatus according to an embodiment of the disclosure includes: a processor 600 configured to read and execute a program in a memory 620 to: determine synchronization priorities of a plurality of nodes upon reception of synchronization signals of the plurality of nodes through a transceiver 610; and select a synchronization signal of one of the nodes for synchronization, according to the synchronization priorities of the plurality of nodes.

In an embodiment, when the processor 600 is configured to select a synchronization signal of one of the nodes for synchronization, according to the synchronization priorities of the plurality of nodes, the processor is further configured to: select a synchronization signal of a node having a highest synchronization priority when the synchronization priorities of the plurality of nodes are different.

In an embodiment, power of the synchronization signal of the node having the highest synchronization priority is above a preset threshold.

In an embodiment, when the processor 600 is configured to select a synchronization signal of one of the nodes for synchronization, according to the synchronization priorities of the plurality of nodes, the processor is further configured to: select a synchronization signal of a node having a strongest signal power when the synchronization priorities of the plurality of nodes are different.

In an embodiment, a synchronization priority of each node is one of following priorities: a first priority, where a node having the first priority is a node obtaining a synchronization signal directly from a GNSS or a GNSS-equivalent; a second priority, where a node having the second priority is a node obtaining a synchronization signal from the node having the first priority; and a third priority, where a node having the third priority is a node obtaining a synchronization signal from the node at the second priority; or the node having the third priority is a node obtaining a synchronization signal from the node having the third priority; or the node having the third priority is a node operating independently as a synchronization source.

In an embodiment, the processor 600 is further configured to: use a synchronization signal of a GNSS for synchronization, upon reception of the synchronization signal of the GNSS; or use a synchronization signal of a GNSS-equivalent for synchronization, upon reception of the synchronization signal of the GNSS-equivalent.

In an embodiment, the processor 600 is further configured to: use a local oscillator as an independent synchronization source when no synchronization signal is received.

The transceiver 610 is configured to receive and transmit data under the control of the processor 600.

Here in Fig. 6, the bus architecture can include any number of interconnecting buses and bridges to particularly link together various circuits including one or more processors represented by the processor 600, and one or more memories represented by the memory 620. The bus architecture can further link together various other circuits, e.g., a peripheral device, a manostat, a power management circuit, etc., all of which are well known in the art, so a further description thereof will be omitted in this context. The bus interface serves as an interface. The transceiver 610 can be a number of elements, e.g., a transmitter and a receiver, which are units for communication with various other devices over a transmission medium. For different user equipments, the user interface 630 can also be an interface via which a device(s) is connected externally and/or internally,, where the connected device(s) includes but will not be limited to a keypad, a display, a loudspeaker, a microphone, a joystick, etc.

The processor 600 is responsible for managing the bus architecture and performing normal processes, and the memory 620 can store data for use by the processor 600 in performing operations.

The processor 600 can be a Central Processing Unit (CPU), an Application Specific Integrated Circuit (ASIC), a Field-Programmable Gate Array (FPGA), or a Complex Programmable Logic Device (CPLD).

In summary, in the embodiments of the disclosure, the synchronization priorities in the GNSS or GNSS-equivalent based synchronization mode are sorted as follows in a descending order of the priorities.

The Priority 1 relates to a GNSS or GNSS-equivalent signal transmitted via no hop. A node at this priority is synchronized directly with the GNSS or GNSS-equivalent.

The Priority 2 relates to a GNSS or GNSS-equivalent signal transmitted over one hop. A node at this priority cannot be synchronized directly with the GNSS or GNSS-equivalent, but is synchronized with a node synchronized directly with the GNSS or GNSS-equivalent.

The Priority 3 relates to the other instances. A node at this priority cannot obtain any GNSS or GNSS-equivalent signal directly, and is a UE which can receive a valid synchronization signal transmitted by a UE at the Priority 2. Or, a node at this priority can neither obtain any GNSS or GNSS-equivalent signal directly, nor receive any valid synchronization signal transmitted by a UE at a priority above the Priority 3, but is a UE which can receive a valid synchronization signal transmitted by a UE at the Priority 3. Or, a node at this priority can neither obtain any GNSS or GNSS-equivalent signal directly, nor receive a synchronization signal transmitted from any UE, but operates as an independent synchronization source.

The embodiments of the disclosure propose a method for setting a GNSS or GNSS-equivalent based synchronization priority in an LTE V2X system so as to support setting of synchronization priorities at different precision in the LTE V2X system. The synchronization priority can be set reasonably, the precision of synchronization can be guaranteed, the signaling overhead can be lowered, and the highly precise synchronization information can be transmitted reasonably in the GNSS based synchronization mechanism in the LTE V2X system.

Those skilled in the art shall appreciate that the embodiments of the disclosure can be embodied as a method, a system or a computer program product. Therefore the disclosure can be embodied in the form of an all-hardware embodiment, an all-software embodiment or an embodiment of software and hardware in combination. Furthermore the disclosure can be embodied in the form of a computer program product embodied in one or more computer useable storage mediums (including but not limited to a disk memory, an optical memory, etc.) in which computer useable program codes are contained.

The disclosure has been described in a flow chart and/or a block diagram of the method, the device (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow chart and/or the block(s) of the block diagram.

Evidently those skilled in the art can make various modifications and variations to the disclosure without departing from the spirit and scope of the disclosure. Thus the disclosure is also intended to encompass these modifications and variations thereto so long as the modifications and variations come into the scope of the claims appended to the disclosure and their equivalents.

## Claims

1. A synchronization method, comprising:
determining synchronization priorities of a plurality of nodes upon reception of synchronization signals of the plurality of nodes; and
selecting a synchronization signal of one of the nodes for synchronization, according to the synchronization priorities of the plurality of nodes.

2. The method according to claim 1, wherein selecting the synchronization signal of one of the nodes for synchronization, according to the synchronization priorities of the plurality of nodes comprises:
selecting a synchronization signal of a node having a highest synchronization priority when the synchronization priorities of the plurality of nodes are different.

3. The method according to claim 2, wherein power of the synchronization signal of the node having the highest synchronization priority is above a preset threshold.

4. The method according to claim 1, wherein selecting the synchronization signal of one of the nodes for synchronization, according to the synchronization priorities of the plurality of nodes comprises:
selecting a synchronization signal of a node having a strongest signal power when the synchronization priorities of the plurality of nodes are different.

5. The method according to claim 1, wherein a synchronization priority of each node is one of following priorities:
a first priority, wherein a node having the first priority is a node obtaining a synchronization signal directly from a Global Navigation Satellite System, GNSS, or a system equivalent to the GNSS, GNSS-equivalent;
a second priority, wherein a node having the second priority is a node obtaining a synchronization signal from the node having the first priority; and
a third priority, wherein a node having the third priority is a node obtaining a synchronization signal from the node at the second priority; or the node having the third priority is a node obtaining a synchronization signal from the node having the third priority; or the node having the third priority is a node operating independently as a synchronization source.

6. The method according to claim 1, further comprising:
using a synchronization signal of a GNSS for synchronization, upon reception of the synchronization signal of the GNSS; or
using a synchronization signal of a GNSS-equivalent for synchronization, upon reception of the synchronization signal of the GNSS-equivalent.

7. The method according to any one of the claims 1 to 6, further comprising:
using a local oscillator as an independent synchronization source when no synchronization signal is received.

8. A synchronization apparatus, comprising:
a first unit configured to determine synchronization priorities of a plurality of nodes upon reception of synchronization signals of the plurality of nodes; and
a second unit configured to select a synchronization signal of one of the nodes for synchronization, according to the synchronization priorities of the plurality of nodes.

9. The apparatus according to claim 8, wherein the second unit is further configured to:
select a synchronization signal of a node having a highest synchronization priority when the synchronization priorities of the plurality of nodes are different.

10. The apparatus according to claim 9, wherein power of the synchronization signal of the node having the highest synchronization priority is above a preset threshold.

11. The apparatus according to claim 8, wherein the second unit is further configured to:
select a synchronization signal of a node having a strongest signal power when the synchronization priorities of the plurality of nodes are different.

12. The apparatus according to claim 8, wherein a synchronization priority of each node is one of following priorities:
a first priority, wherein a node having the first priority is a node obtaining a synchronization signal directly from a Global Navigation Satellite System, GNSS, or a system equivalent to the GNSS, GNSS-equivalent;
a second priority, wherein a node having the second priority is a node obtaining a synchronization signal from the node having the first priority; and
a third priority, wherein a node having the third priority is a node obtaining a synchronization signal from the node at the second priority; or the node having the third priority is a node obtaining a synchronization signal from the node having the third priority; or the node having the third priority is a node operating independently as a synchronization source.

13. The apparatus according to claim 8, wherein the second unit is further configured to:
use a synchronization signal of a GNSS for synchronization, upon reception of the synchronization signal of the GNSS; or
use a synchronization signal of a GNSS-equivalent for synchronization, upon reception of the synchronization signal of the GNSS-equivalent.

14. The apparatus according to any one of the claims 8 to 13, wherein the second unit is further configured to:
use a local oscillator as an independent synchronization source when no synchronization signal is received.

15. A synchronization apparatus, comprising a processor configured to read and execute a program in a memory to:
determine synchronization priorities of a plurality of nodes upon reception of synchronization signals of the plurality of nodes through a transceiver; and
select a synchronization signal of one of the nodes for synchronization, according to the synchronization priorities of the plurality of nodes.

16. The apparatus according to claim 15, wherein the processor is further configured to:
select a synchronization signal of a node having a highest synchronization priority when the synchronization priorities of the plurality of nodes are different.

17. The apparatus according to claim 16, wherein power of the synchronization signal of the node having the highest synchronization priority is above a preset threshold.

18. The apparatus according to claim 15, wherein the processor is further configured to:
select a synchronization signal of a node having a strongest signal power when the synchronization priorities of the plurality of nodes are different.

19. The apparatus according to claim 15, wherein a synchronization priority of each node is one of following priorities:
a first priority, wherein a node having the first priority is a node obtaining a synchronization signal directly from a Global Navigation Satellite System, GNSS, or a system equivalent to the GNSS, GNSS-equivalent;
a second priority, wherein a node having the second priority is a node obtaining a synchronization signal from the node having the first priority; and
a third priority, wherein a node having the third priority is a node obtaining a synchronization signal from the node at the second priority; or the node having the third priority is a node obtaining a synchronization signal from the node having the third priority; or the node having the third priority is a node operating independently as a synchronization source.

20. The apparatus according to claim 15, wherein the processor is further configured to:
use a synchronization signal of a GNSS for synchronization, upon reception of the synchronization signal of the GNSS; or
use a synchronization signal of a GNSS-equivalent for synchronization, upon reception of the synchronization signal of the GNSS-equivalent.

21. The apparatus according to any one of the claims 15 to 20, wherein the processor is further configured to:
use a local oscillator as an independent synchronization source when no synchronization signal is received.
